Europäisches Patentamt

European Patent Office

Office européen des brevets

(11) Veröffentlichungsnummer: **0 201 718**
A2

# (12) EUROPÄISCHE PATENTANMELDUNG

(21) Anmeldenummer: 86104757.9

(22) Anmeldetag: 08.04.86

(51) Int. Cl.⁴: **B 26 D 3/18**
B 26 D 1/09

(30) Priorität: 17.05.85 DE 8514599 U

(43) Veröffentlichungstag der Anmeldung:
20.11.86 Patentblatt 86/47

(84) Benannte Vertragsstaaten:
AT BE CH DE FR GB IT LI LU NL SE

(71) Anmelder: Topp, Burkhard
Am Buschufer 1
D-5840 Schwerte-Villigst(DE)

(72) Erfinder: Topp, Burkhard
Am Buschufer 1
D-5840 Schwerte-Villigst(DE)

(74) Vertreter: Patentanwälte Meinke und Dabringhaus
Dipl.-Ing. J. Meinke Dipl.-Ing. W. Dabringhaus
Westenhellweg 67
D-4600 Dortmund 1(DE)

(54) Vorrichtung zum Ausstanzen von Formteilen aus Käse.

(57) Bei einer Vorrichtung zum Ausstanzen von Formteilen aus Käse mit einem entsprechend der Formteile angeordneten Schneiden aufweisenden, geführten Stanzrahmen und einem Auflagetisch mit den Durchtritt der Schneiden ermöglichenden Auflageteilflächen, soll eine Lösung geschaffen werden, mit der derartige kleinvolumige Käsehäppchen auch in von der Würfelform abweichende Kontur erzeugbar sind, und zwar insbesondere auch zum Einsatz in Haushalten. Dies wird dadurch erreicht, daß zum Ausstanzen von Formteilen aus Käsescheiben (12) der Stranzrahmen (4) an mehr als zwei Führungselementen (3) geführt und mit zwei Griffen (8) zur Ausübung der Stanzbewegung von Hand ausgerüstet ist.

EP 0 201 718 A2

Die Erfindung richtet sich auf eine Vorrichtung zum Ausstanzen von Formteilen aus Käse mit einem entsprechend der Formteile angeordneten Schneiden aufweisenden, geführten Stanzrahmen und einem Auflagetisch mit den Durchtritt der Schneiden ermöglichenden Auflageteilflächen.

Aus der US-PS 2 561 274 ist eine handbetätigbare Vorrichtung zum Schneiden von Kuchen, Käsen oder ähnlichen Produkten bekannt. Diese bekannte Vorrichtung weist einen Schneidring mit speichenförmig angeordneten Schneiden aus, die ein typisches Schnittbild von Kuchenstücken erzeugen. Dieser Schneidring ist seitlich neben dem Schneidtisch an zwei Ständern geführt und weist einen zentrischen Stößel auf, der über einen großen Schwenkhebel vom Benutzer durch Niederdrücken des Handhebels abgesenkt werden kann, wobei der Schwenkhebel gemäß der Hebelgesetze zur Übersetzung der Schnittkräfte dient.

Die bekannte Vorrichtung ist vergleichsweise aufwendig und im Prinzip für den professionellen Einsatz geeignet, beispielsweise in Brotfabriken od. dgl.

Es ist bekannt, für kleine Imbisse, für Partys od. dgl. Käsehäppchen zu erzeugen, die unterschiedlich dekoriert und hergerichtet mit kleinen Spießen serviert werden. Dabei wird eine sehr stark geschnittene Käsescheibe in der Regel von Hand mit einem Messer in mehr oder weniger würfelförmige Stücke zerteilt.

Aufgabe der Erfindung ist die Schaffung einer Vorrichtung, mit der derartige kleinvolumige Käsehäppchen auch in von der Würfelform abweichende Kontur erzeugbar sind, und zwar insbesondere auch zum Einsatz in Haushalten.

Diese Aufgabe wird bei einer Vorrichtung der eingangs bezeichneten Art dadurch gelöst, daß zum Ausstanzen von Formteilen aus Käsescheiben der Stanzrahmen an mehr als zwei Führungselementen geführt und mit zwei Griffen zur Ausübung der Stanzbewegung von Hand ausgerüstet ist.

Mit dieser Gestaltung läßt sich insbesondere durch die zuverlässige Führung des Stanzrahmens erreichen, daß die Vorrichtung von Hand ohne eine Übersetzung über einen Hebelmechanismus bedient werden kann, was die Anzahl der einzusetzenden Bauteile stark verringert und damit eine wirtschaftliche Produktion der Vorrichtung möglich macht.

In Ausgestaltung sieht die Erfindung vor, daß der Stanzrahmen im wesentlichen quadratisch ausgebildet und mit in Führungsstangen geführten Gleitkörpern in jeder Ecke ausgerüstet ist.

Die Erfindung sieht darüber hinaus auch vor, daß die Stanzmesser wenigstens bereichsweise eine Kontur zur Erzeugung figürlicher Käsestücke aufweisen.

Insbesondere bei der zuletztgenannten Art der Ausbildung der Erfindung kann die Messergestaltung so gewählt sein, daß, ähnlich wie bei einem Konturenverlauf von Bilderpuzzlen, figürlich oder unregelmäßig gekrümmte Schneideebenen erzeugt werden, die aus einer zu Beginn quadratischen geschlossenen Kontur einer Käsescheibe od. dgl. eine Vielzahl von kleinen puzzleartig ineinander passenden Käsestücken erzeugt.

Es versteht sich von selbst, daß alle Teile aus einem physiologisch unbedenklichem Material, z. B. Edelstahl od. dgl., gefertigt sind. Selbstverständlich können auch die Gleitkörper, der Rahmen u. dgl. aus Kunststoff gefertigt sein, wobei dann die Schneidmesser das entsprechend gut zu reinigende und hochwertige Material aufweisen.

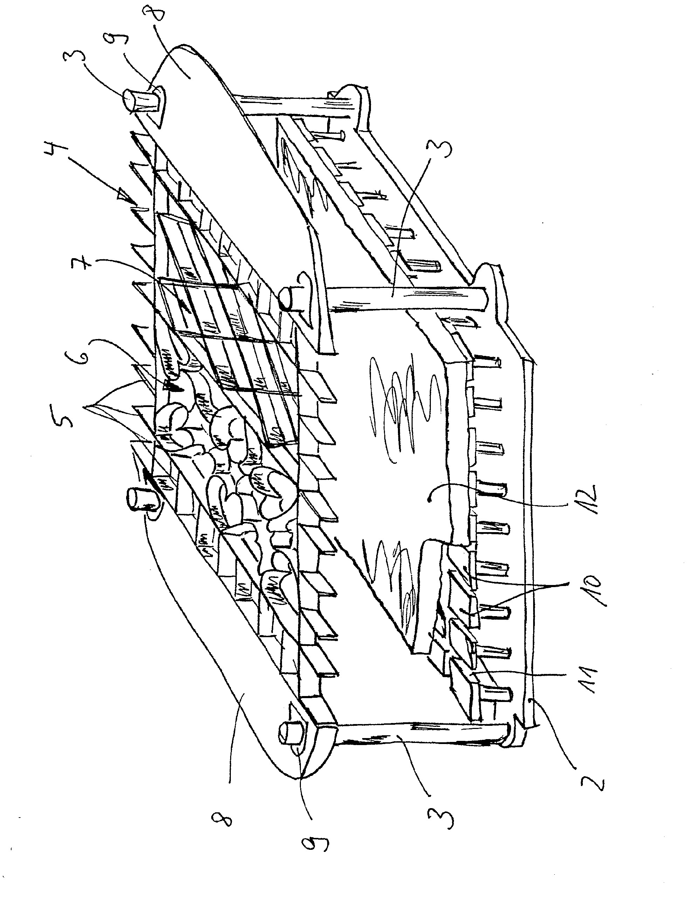

Die Erfindung ist nachstehend anhand der Zeichnung beispielsweise näher erläutert. Diese zeigt in der einzigen Figur die räumliche Ansicht einer Vorrichtung nach der Erfindung in vereinfachter Darstellung.

Die allgemein mit 1 bezeichnete Vorrichtung besteht aus einem Grundrahmen oder einer Grundplatte 2 mit nicht näher dargestellten Standfüßen od. dgl. sowie mit daran angeordneten Führungsstangen 3, an denen ein Stanzrahmen 4 geführt ist.

Betrachtet man den Stanzrahmen 4, so weist dieser im dargestellten Beispiel eine Vielzahl von außenrandseitigen, geraden Schneiden 5, einen Bereich 6 mit figürlich gekrümmten Schneiden, die im dargestellten Beispiel u. a. herzförmig ausgebildet sind, und einen Bereich 7 mit rautenförmig angeordneten Schneiden auf.

An zwei gegenüberliegenden Seiten sind am Stanzrahmen 4 Griffe 8 angeordnet, die vom Benutzer ergriffen und mit denen die Schneidbewegungen ausgeführt werden können.

In den Griffen 8 sind randseitig Gleitkörper 9 eingebracht, die die Führungsstangen 3 umschließen und beispielsweise aus einem reibungsvermindernden Material, wie z. B. Nylon, bestehen können.

Die Grundplatte 2 weist eine Vielzahl von Auflageteilflächen 10 auf, die zwischen sich Spalte aufweisen, die der Kontur der Schneiden 5 bzw. der entsprechenden figurativen Gestaltungen der Bereiche 6 und 7 derart entsprechen, daß der Stanzrahmen bis zur Auflage auf die Grundplatte 2 abgesenkt werden kann, d. h. unterhalb der durch die Auflageteilflächen 10 gebildeten Auflageebene. In der Abbildung ist auf dieser Ebene eine Käsescheibe 12 in ungeschnittenem, teilweise aufgebrochenem Zustand wiedergegeben.

Die Wirkungsweise der Vorrichtung ist dabei die folgende:

Aus dem Mitteblock eines großen Käses sind beispielsweise Käsescheiben ausgeschnitten worden, die beispielsweise 19 cm lang, 12 cm breit und 1,5 cm hoch sind. Diese Maße ergeben sich aus einer bestimmten Teilung, beispielsweise eines Goudakäses. Eine derartige Scheibe 12 wird in die Vorrichtung 1 eingelegt. Dabei kann der Stanzrahmen 4 aus den Führungsstangen 3 ausgehoben sein oder aber z. B. durch eine Federung an den Führungsstangen in der in der Figur wiedergegebenen Position gehalten sein.

Der Benutzer ergreift die beiden Griffe 8 und senkt den Stanzrahmen 4 ab, durchtrennt zunächst den Käse und drückt dann den gesamten Rahmen soweit ab, daß dieser auf der unteren Grundplatte 2 aufruht. Damit liegen oberhalb des Stanzrahmens 4 auf den Auflageteilflächen entsprechend ausgestanzte Käsehäppchen.

Natürlich ist das beschriebene Ausführungsbeispiel der Erfindung in vielfacher Hinsicht abzuändern ohne den Grundgedanken zu verlassen. So ist die Erfindung insbesondere nicht auf die wiedergegebene Art der Anordnung der einzelnen Schneiden beschränkt. Hier können eine Vielzahl von

0201718

Konturen und Anordnungen gewählt werden. Statt einer in Aufwärtsrichtung gerichteten Federung kann auch eine in umgekehrter Richtung wirkende vorgesehen sein, d. h. in der Richtung, in der die Stanzbewegung ausgeübt wird u. dgl. mehr.

0201718

Patentansprüche:

1. Vorrichtung zum Ausstanzen von Formteilen aus Käse mit einem entsprechend der Formteile angeordneten Schneiden aufweisenden, geführten Stanzrahmen und einem Auflagetisch mit den Durchtritt der Schneiden ermöglichenden Auflageteilflächen,

dadurch gekennzeichnet,

daß zum Ausstanzen von Formteilen aus Käsescheiben (12) der Stanzrahmen (4) an mehr als zwei Führungselementen (3) geführt und mit zwei Griffen (8) zur Ausübung der Stanzbewegung von Hand ausgerüstet ist.

2. Vorrichtung nach Anspruch 1,

dadurch gekennzeichnet,

daß der Stanzrahmen (4) im wesentlichen quadratisch ausgebildet und mit in Führungsstangen (3) geführten Gleitkörpern (9) in jeder Ecke ausgerüstet ist.

3. Vorrichtung nach einem der vorangehenden Ansprüche,

dadurch gekennzeichnet,

daß die Stanzmesser (5-7) wenigstens bereichsweise eine Kontur zur Erzeugung figürlicher Käsestücke aufweisen.

0201718